# EUROPEAN PATENT APPLICATION

(11) **EP 4 600 486 A1**
(43) Date of publication of application: **13.08.2025**
(21) Application number: 24157020.9
(22) Date of filing: 12.02.2024
(51) Int. Cl.: F03D 17/00

(54) **AN AUTONOMOUS 3D MODELING AND ANOMALY DETECTION SYSTEM, OFFSHORE ARRANGEMENT AND ASSOCIATED METHODS**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

Method (300), offshore arrangement (124) and autonomous 3D modeling and anomaly detection system (202) suitable for offshore wind turbines (112), comprising unmanned vehicles, in particular an aerial vehicle (108) and an underwater vehicle (110), the system capable of generating three-dimensional models (3DG) of adjacently mounted components, both beneath and above sea level, which may be compared to reference three-dimensional models (3DR) to detect discrepancies, anomalies or fault conditions, in particular before, during and after assembly, in particular through a tolerance comparison, which allows for early detection of potential issues, such as misalignments and structural defects, wherein the system may further comprise machine-readable scanning capabilities to detect machine-readable identifier (126) arranged on components of the wind turbine, to facilitate tracking, certificate emission, interacting with the processing modules to facilitate 3D generation and/or pinpoint location of defects.

## Description

### FIELD OF THE INVENTION

The invention relates to an autonomous 3D modeling and anomaly detection system for wind turbines, in particular for offshore wind turbines, that tracks anomalies or fault conditions from an assembly stage and also after commissioned. The invention further relates to an offshore arrangement comprising said system, and associated methods, which employ unmanned vehicles to ensure the structural integrity of wind turbine components throughout various stages of their lifecycle including prior and during assembly.

### BACKGROUND

The escalating dimensions and consequent weight of wind turbines, especially offshore wind installations, and particularly with the advent of substantial hydrogen generation platforms, underscore the criticality of exacting assembly tolerances in the wind energy sector. As turbines grow in size, the demand for maintaining stringent tolerance thresholds intensifies, with the slightest deviations potentially leading to significant structural inefficiencies or failures. The requirement for precision is not merely incremental; it is, in fact, becoming increasingly rigorous and demanding, as the industry moves toward larger and more complex installations.

Current methodologies in the wind turbine industry, both within the offshore and onshore sector, are predominantly focused on visual inspections conducted by drones, which are typically limited to specific parts such as blades. While such inspections are valuable for maintenance and post-assembly evaluations, they fall short of detecting the precise tolerances and precise 3D discrepancies which may be crucial for ensuring the overall structural integrity during the critical phases of transportation and assembly.

The traditional use of drones offers a fragmented view, concentrating on visible, above-water components and often neglecting the integral subsea structures, which may include the monopile, transition piece, and caissons. Furthermore, this approach based on pictures and surface defects with a drone, may overlook critical misalignments or tolerance breaches that are vital to the wind turbine's overall stability and operational efficacy. As the industry progresses, the need for a more nuanced and comprehensive inspection capability increases, one that transcends the limitations of current drone technology which is geared more toward capturing general images rather than performing precise tolerance checks of the whole assembly or at least of a plurality of components being mounted adjacently to one another, particularly underneath sea level and above.

Drone inspection is usually configured to capture specific parts, for example pictures or videos of a specific portion of a blade or of the tower. The absence of a more comprehensive but at the same time accurate overview of the whole platform, joints, overall tolerances, including subsea elements on an offshore wind turbine, impedes a complete structural integrity assessment and further prevents early detection of problems, for example by tracking and documenting from the assembly stages for either early detection or for later usage during a root-cause failure analysis.

The need for accurate tolerance detection is further magnified by the demanding conditions of the offshore setting, where environmental factors such as wind, waves, and saltwater corrosion present additional challenges to structural stability. The vast scale of offshore wind turbines means that any discrepancy in the assembly tolerances can propagate through the structure, magnifying the impact and potentially leading to failures. This risk is particularly acute when it comes to the installation of heavy components high above the waterline, such as hydrogen platforms, where precision in assembly is not just a matter of efficiency, but of safety and longevity.

Known current drone solutions, taking videos and photos, while adept at capturing high-resolution images for visual inspection purposes, does not inherently possess the capability to measure and verify the fine tolerances required for ensuring the integrity of joints, flanges, and other critical connection points. These limitations are not merely a matter of resolution or image clarity but stem from a lack of integration with systems capable of analyzing and interpreting complex spatial data to assess conformity with stringent engineering specifications.

Moreover, the inability of existing technology to provide real-time digital tracking and assessment of component conditions throughout the logistical and assembly processes represents a significant gap. This gap not only affects the quality assurance during the installation but also complicates the maintenance and service operations that are crucial for the long-term operation of offshore wind turbines. Without a detailed and precise digital record, verifying compliance with design specifications and operational tolerances becomes a challenging task, often leading to reactive rather than proactive maintenance strategies.

In addition, the industry lacks efficient digital tracking and documentation of component conditions throughout the stages of transportation, assembly, and post-installation. This deficiency can lead to challenges in accountability and insurance claims, as it becomes difficult to determine when damage to components occurred. The traditional reliance on manual measurements for large structures introduces potential for human error and inefficiencies, further exacerbating the risk of undetected discrepancies that could lead to failures, especially in the demanding offshore environment.

The offshore wind industry currently lacks a standardized digital handover process that could provide detailed, autonomous, or semi-autonomous tracking of each component's journey from manufacture through to installation. There is a lack of quality control but also for streamlining the documentation process, facilitating insurance claims, and ensuring accountability at each stage of the turbine's lifecycle.

Addressing the multifaceted challenges faced by the offshore wind turbine industry, a significant gap exists in effectively detecting and documenting the critical tolerances and discrepancies throughout the transportation upon arriving to the onsite location, during assembly, and further for maintenance stages. The complexity and scale of these turbines, especially with the integration of substantial components like hydrogen platforms, demand an unprecedented level of precision in assembly and maintenance. However, the current industry practices, primarily focused on visual inspections of above-water parts, fall short in pro-actively addressing these stringent tolerance thresholds.

Despite the technological advancements in wind turbine design and construction, there remains a notable deficiency in systems or methodologies that can offer a detailed, all-encompassing assessment spanning both visible and submerged turbine parts. This oversight not only poses risks to the structural integrity and operational efficiency of these colossal structures but also highlights a missed opportunity for early detection and resolution of potential issues. The lack of proactive solutions capable of navigating the intricate balance between the above and below water components of wind turbines underscores a critical need in the industry - a need for innovative approaches that can keep pace with the evolving complexities and demands of modern offshore wind energy generation.

In addition, known solutions fail to allow a precise tracking, by digital means, of defects or tolerances of components prior, during or after assembly, particularly at junctions where different components meet, wherein potential weak points may remain undetected during assembly, resulting in costly and challenging post-installation resolutions. This disadvantages aggregates in offshore installations where the subsea foundation structures are not taken into consideration even when a drone is used for inspection.

Furthermore, identifying damage occurring during transportation or assembly stages is challenging with current technologies, especially during offshore assembly. Without the capability to detect subtle damages or alterations until after installation, there is an increased risk of safety hazards. This issue is further compounded by the inability to demonstrate whether components arrived damaged or were damaged during assembly and installation, impacting insurance and accountability.

In light of the complex challenges outlined, there emerges an urgent and unmet need within the offshore wind turbine industry for a comprehensive solution. Without a detailed 3D visualization of the interconnected components, critical tolerance discrepancies that could affect the entire structure might go undetected. Such oversights are particularly problematic given the increasing complexity and size of modern offshore wind turbines, where even minor deviations can have magnified consequences. The industry's current reliance on segmental inspections, rather than a holistic analysis, heightens the potential for overlooked issues that could compromise the safety, durability, and efficiency of these installations. Furthermore, the lack of a broader, more integrated overview of the components mounted or being mounted, and particularly one that includes critical but often underrepresented subsea components like monopiles, transition pieces, and caissons, results in a fragmented understanding of the turbine's overall structural integrity.

The aim of the invention is therefore to provide an autonomous 3D modeling and anomaly detection solution for a wind turbine, in particular for offshore wind turbines, which overcomes at least some of the aforementioned disadvantages.

### BRIEF SUMMARY

The object of the invention is achieved by the independent claims. The dependent claims describe advantageous developments and modifications of the invention.

In accordance with a first aspect, there is provided an autonomous 3D modeling and anomaly detection system for wind turbines, particularly advantageous for offshore wind turbines.

At its core, the system may employ one or more unmanned vehicles. Each of these unmanned vehicles may equipped with an image capturing module and a distance measuring module, enabling them to capture detailed images of wind turbine components and measure distances to and/or from these components. One of the significance advantageous capabilities of the system may lie on its ability to facilitate precise three-dimensional models, 3D mapping and analysis of wind turbine components extending both bellow and above the surface of the sea, and further monitoring from an assembly stage associated joints at the interface and beneath of the sea level or water surface and detecting anomalies, discrepancies, and fault conditions, in particular tolerance mismatching within allowable levels.

The condition and tolerances of the subsea foundation components may have a big impact on the tower, nacelle, and rotor wind turbine components, capturing the interface and components from bellow and above, and may be important for maintaining their operational integrity and detecting anomalies from the assembly stage.

Communicated or incorporated into each unmanned vehicle is an image processing module that is capable of generating three-dimensional models of one or more components of the wind turbine. This may be based on the captured images and distance measurements, providing a comprehensive and accurate representation of the turbine's physical state and assembly tolerances, in particular capturing anomalies, discrepancy or faults raising from the foundation level beneath the sea level. The system may also include a data processing module, either integrated with or communicating with the image processing module. This data processing module or the image processing module itself may have access to a database containing reference 3D models of wind turbine components at reference conditions, allowing for a comparison between the generated models and the reference models. Such a comparison allows for identifying any discrepancies or faulty conditions, for example tolerances, ensuring timely maintenance and prevention of potential failures before assembly and during assembly, for example detecting the precise anomaly assembly stage during of after thereof.

Within the meaning of the invention, reference conditions are referred to allowable conditions or acceptable tolerance levels of the components or set of components represented in a 3d reference three-dimensional models.

The comparison may comprise a point cloud generation of both models and further a divergence comparison. This involves converting both the generated 3D model and the reference model into point clouds, where each model is represented as a set of vertices in a three-dimensional coordinate system. Techniques like Iterative Closest Point (ICP) algorithm may be used to align these point clouds and then compute the differences between them. This may be particularly useful for detecting geometric discrepancies and deviations in shape or size.

In addition, or as an alternative of the above, the comparison may comprise a mesh comparison. For example, both 3D models are represented as meshes composed of vertices, edges, and faces. Techniques such as Hausdorff distance measurement can be used to compute the maximum distance of a set of points (from one model) to the nearest points on the other model. This technique is effective for identifying surface discrepancies, including warps or deformations.

In addition, or as an alternative of the above, the comparison may comprise a volumetric comparison. This technique involves analyzing the volume occupied by each 3D model. By segmenting the models into corresponding volumetric segments, one can compute and compare the volume of each corresponding segment. This is particularly useful for identifying discrepancies in the bulk of components, which might be indicative of material wear or erosion.

In addition, or as an alternative of the above, the comparison may comprise a texture and material analysis: For components where surface texture or material properties are critical, techniques like texture mapping comparison can be applied. This involves examining the surface properties of the models to identify differences in texture patterns or material characteristics, which can be indicative of surface wear or corrosion.

In addition, or as an alternative of the above, the comparison may comprise a feature-based comparison. This feature-based comparison may rely on identifying key features (like edges, corners, joints, flanges or specific geometric patterns) in both models and comparing these features in terms of their position, orientation, and scale. This feature-based technique may be used in combination with other techniques to provide a more comprehensive comparison.

In addition, or as an alternative of the above, the system may employ one or more machine learning algorithms, for example trained for image or pattern recognition (like Convolutional Neural Networks). In particular, it may be trained to identify specific types of discrepancies or anomalies between the models, making the comparison more intelligent and adaptive. The system may preferably comprise a trained machine learning algorithm for underwater conditions and a trained machine learning algorithm for above surface conditions, each for the corresponding images captures beneath or above the sea level. Further embodiments employing one or more machine learning models will be explained further bellow.

In some embodiments, complementing or as an alternative of the embodiments above, a heat map may be used. For example, after comparing the 3D models using one or more of the above techniques, a visual tool like a heatmap can be generated to visually represent the areas of discrepancy. Areas with no discrepancies can be marked.

The versatility of the system may be further enhanced by the possibility of including various types of unmanned vehicles, such as underwater vehicles and aerial vehicles (UAVs). The underwater vehicles, for instance, could be Remotely Operated Underwater Vehicles (ROVs) or Autonomous Underwater Vehicles (AUVs), each selected based on the specific environmental conditions and/or operational requirements. This flexibility may be important for thorough inspection and maintenance of wind turbines, particularly of offshore wind turbine installation, which often have components located both underwater and above water if the foundation is not a floating platform.

The system's 3D modeling/generation may include at least two or more adjacently mounted components of a wind turbine. The database may comprise reference three-dimensional models for these configurations, aiding in the detailed assessment of the connections and interactions between these components. This feature is particularly beneficial for ensuring the structural integrity and efficient functioning of the wind turbine, especially in the areas where different components meet such a as flanges or joints, and for the overview of the structure whereupon tolerances which are linked to the whole assembly (aggregated from assembly tolerance mismatching of other parts) can be determined.

An optional embodiment of the system may involve the use of a machine-readable identifiers on each component, and more particularly on different portions of the wind turbine components. The unmanned vehicles may be configured to scan these identifiers, streamlining the process of tracking and analyzing various parts of the turbine. This approach not only enhances the organization of maintenance and inspection data but also contributes to a more targeted and efficient troubleshooting process.

In addition to the core functionalities, the system may further refine its analytical capabilities. For instance, the data processing module may utilize the scanned machine-readable identifiers for various purposes. These include accessing corresponding 3D reference models from the database, integrating multiple 3D models into a singular comprehensive model, pinpointing discrepancies, anomalies, or faulty conditions directly to the corresponding portion, and/or issuing or recording compliance information. This multi-faceted use of data enhances the system's ability to provide detailed and actionable insights, which is advantageous for effective maintenance and repair strategies. Furthermore, this may facilitate to leverage the computer resources for organizing the components for the generation of the three-dimensional model, preempting for which portion or one component of the whole structure corresponds to the images and distances taken.

I.e., one or more components, or portions of a component may be labeled with a unique machine-readable identifier, and the unmanned aerial vehicle and underwater vehicle may be configured to scan these unique machine-readable identifiers to identify the components thereof during a step of the survey or 3D modelling for detecting anomalies.

In addition, the scanned unique machine-readable identifier may be used by the system to document the location of any identified damage or anomaly in a digital record.

For example, a digital certification signal may emit and save an approval signal based on the comparison of the 3D models when the comparison results in no structural defects or anomalies, preferably said approval signal comprising a proof of compliance certificate. This may be integrated in a specific module configured to emit and receive information from the machine-readable identifiers or may be integrated in a data processing module which may further post-process the images and execute the comparisons.

The machine-readable identifier may be a QR code, a barcode, or any other equivalent suitable machine-readable identifier, such further suitable machine-readable identifiers will become apparent in view of the present description and drawings.

Each one or more unmanned vehicles may also comprise an image capturing module with diverse image capturing elements such as high-resolution digital cameras, infrared cameras, multispectral imaging sensors, and side-scan sonar. Each element provides a unique advantage, such as capturing images in varying light conditions or underwater environments, thereby broadening the scope of the system's inspection capabilities. One or more types of images capturing elements may be integrated in the image capturing module.

Similarly, the distance measuring module may include a variety of distance measuring elements like Lidar devices, sonar devices, radar-based sensors, Ultra-Short Baseline (USBL), and Doppler Velocity Logs (DVL). The inclusion of these diverse technologies ensures that distance measurements are accurate and reliable regardless of environmental conditions. One of more of these distance measuring elements may be integrated in the distance measuring module.

In some embodiments, the system may comprise a data processing module which may incorporate or communicate with one or more machine learning algorithm. These algorithms may be trained using a dataset of previously captured images that include discrepancies and faulty conditions from various wind turbine components. The advantage of this feature is twofold: it allows the system to learn from past data, thereby improving its diagnostic capabilities over time, and it provides a more nuanced understanding of the range of potential issues that might affect wind turbine components. Furthermore, reference three-dimensional models may be only used for its training, leveraging computer resources and efficacy of the comparison.

In an embodiment, the machine learning algorithm may be further trained using the reference models as benchmarks, enhancing its ability to identify deviations or faults. This continuous learning and adaptation may make the system increasingly efficient and accurate in anomaly detection.

In some embodiments, a redundant method may be used, using both the trained machine learning algorithm and a further comparison with the reference three-dimensional models. The comparison may comprise a tolerance comparison within the generated three-dimensional models and the reference three-dimensional models.

The machine learning algorithm may also be trained to recognize and categorize different types of discrepancies, such as structural misalignments, wear and tear, or material defects. By distinguishing between these various types of issues, the system can provide more specific and useful information for maintenance and repair, leading to more targeted and effective interventions.

In a second aspect of the invention, it is provided an autonomous 3D modeling and anomaly detection system, incorporating the one or more trained machine learning algorithms. Once it is trained, the system may not use the reference three-dimensional models, since the machine learning algorithm might be faster, consume less computational resources, and be more effective.

This embodiment of the system is similarly equipped with unmanned vehicles featuring image capturing and distance measuring modules, along with the trained machine learning algorithms. The integration of the machine learning in this manner ensures that the system is not only capable of generating detailed 3D models but also adept at analyzing these models to detect discrepancies or faulty conditions.

The machine learning algorithm in this embodiment may use reference three-dimensional models as part of its training process, serving as a benchmark. This ensures a high standard of accuracy in the algorithm's diagnostic capabilities.

In some embodiments, the one or more machine learning algorithms comprises at least two machine learning modules,
a first machine learning algorithm (226) trained at underwater conditions, configured to detect an absence or existence of a one or more anomalies or faulty conditions for an underwater component, and
a second machine learning algorithm (224) trained at surface conditions, configured to detect an absence or existence of a one or more anomalies or faulty conditions for an above-water component.

The first machine learning algorithm may be trained to recognize discrepancies, anomalies or fault conditions in three-dimensional model models that are specifically indicative of conditions encountered in underwater components, such as corrosion, biofouling, or structural damage unique to submerged environments.

In addition, or alternatively to the above, the first machine learning algorithm may be calibrated or trained to account for unique imaging characteristics associated with underwater environments, such as light refraction, varying visibility conditions, and potential distortions.

In some embodiments, a single machine learning algorithm is trained specifically to in the fusion and analysis of 3D models representing components located both above and beneath the water surface. In particular, further trained on datasets of three-dimensional models with known anomalies or faulty conditions that include integrated 3D models featuring the interface between above water and beneath water components, to enhance its capability in identifying discrepancies that may occur at or near the transition zone between these two environments.

Similarly, the image processing module or the data processing module may incorporate specialized image preprocessing steps to enhance the quality of the three-dimensional models derived from underwater images, including noise reduction, contrast adjustment, and color correction techniques.

The data processing module in this context may be then further configured to perform a validation step, which includes comparing the generated three-dimensional model with the reference models and determining the presence of any discrepancies or faults based on this comparison. This validation step is especially advantageous for confirming the findings of the machine learning algorithm, thereby enhancing the reliability of the system's outputs.

In a yet further aspect, it is provided a method of using the aforementioned system, in any of its various embodiments and aspect of the inventions herein explained. One embodiment includes a method step for assisting in the assembly of offshore wind turbines, wherein the system may be employed during one or more assembly stages. This approach may allow for the identification of faulty assembly stages, involving discrepancies or conditions that deviate from the allowable tolerances or conditions. The advantageous features of this method, including the capability to identify and rectify issues during the assembly phase, can be combined with other aspects or embodiments of the invention to enhance overall efficiency and reliability.

Additionally, the invention may encompass a method for assisting in the maintenance or service of offshore wind turbines. These actions may be triggered, guided, and/or diagnosed based on the detailed information provided by the system such as a tolerance discrepancy, a fault condition or any other discrepancy detected during the determination.

More in particular, the method may comprise the steps of:
operating one or more unmanned vehicles to capture images one or more components of the wind turbine,
   measuring distances from and/or to the at least one component of the wind turbine,
generating a three-dimensional model of the at least one component based at least in part on the captured images and/or distance measurements,
providing or accessing one or more reference three-dimensional models (3DR) of the one or more components of the wind turbine, and
determining, based at least in part of the generated three-dimensional model (3DG) and the one or more reference three-dimensional models, the absence or presence of one or more anomalies or faulty conditions for the one or more components of the wind turbine.

It's important to note that, within the meaning of the present invention, advantages and features of the method, can obviously be combined with other aspects of the invention such as the system or further aspects detailed next, and vice versa, unless explicitly stated otherwise.

In a yet further aspect, it is provided an offshore arrangement comprising one or more components of the wind turbine, such as a subsea foundation arrangement, a tower, and a vessel or any suitable boat equipped with communication and power delivery modules for the unmanned vehicles. This arrangement might further comprise a further vessel equipped with known tools for transporting and installing offshore wind turbines, or all corresponding equipment might be comprised in the same offshore arrangement transporting vessel.

In some embodiments, the arrangement may further comprise the autonomous system of the first aspect, as per any of the embodiments, which may be configured to identify discrepancies or faults in the subsea foundation arrangement, either before, during, or after an assembly step. Further, it may be further configured to detect anomalies, discrepancies, or faults on a component and/or one or more components extending across the water surface, namely, above and beneath thereof.

The integration of such a system into an offshore arrangement, with its capability to preemptively identify and address potential issues, is a significant advantage of the solution provided.

In addition, as stated for previous aspects, any component such as the transition piece, the monopile, the tower, inter alia, may comprise a unique machine-readable identifier, and more particularly located on different portions of said components. The unmanned vehicles may be configured to scan these identifiers, streamlining the process of tracking, and analyzing various parts of the turbine both bellow and above sea level. This approach not only enhances the organization of maintenance and inspection data but also contributes to a more targeted and efficient troubleshooting process and future failure root analysis and maintenance operations.

Further, any previous stated features of the system, the method, and the arrangement, can obviously be combined therebetween, unless stated otherwise.

In yet a further aspect, it is provided a computing apparatus comprising a processor and a memory storing instructions that, when executed by the processor, configure the apparatus to the steps of:
Generating, a three-dimensional model of one or more components of a wind turbine based at least in part on images received or accessed from an image capturing module comprised in a one or more unmanned vehicles,
determining the absence or presence of one or more discrepancies or faulty conditions at the one or more components, said determining based at least in part on any one of the following steps:
   accessing a database that includes one or more reference three-dimensional models of the one or more components of the wind turbine, and performing a comparison of the generated 3D model with the one or more reference three-dimensional models, and/or
   using a trained machine learning algorithm trained with three-dimensional models with known anomalies or faulty conditions with anomalies and/or faulty conditions, in particular further using the one more reference three-dimensional model as part of a training step of the trained machine learning algorithm.

In a yet further aspect, it is provided a non-transitory computer-readable storage medium, the computer-readable storage medium including instructions that when executed by a computer, cause the computer to perform the steps of:
Generating, a three-dimensional model of one or more components of a wind turbine based at least in part on images received or accessed from an image capturing module comprised in a one or more unmanned vehicles,
determining the absence or presence of one or more discrepancies or faulty conditions at the one or more components, said determining based at least in part on any one of the following steps:
   accessing a database that includes one or more reference three-dimensional models of the one or more components of the wind turbine, and performing a comparison of the generated 3D model with the one or more reference three-dimensional models, and/or
   using a trained machine learning algorithm trained with three-dimensional models with known anomalies or faulty conditions with anomalies and/or faulty conditions, in particular further using the one more reference three-dimensional model as part of a training step of the trained machine learning algorithm.

The invention's focus on a detailed, accurate data gathering, 3D modelling, tracking, and anomaly detection analysis, reflects an advancement in the field of wind turbine failure analysis, assembly tolerances and deviation documentation, tracking of components conditions received after transport and during assembly, and for performing maintenance or service operations as a result of the data gathered by the system. Other purposes and advantages will become apparent from the teachings of the present description and figures.

### BRIEF DESCRIPTION OF THE DRAWINGS

Embodiments of the invention are now described, by way of example only, with reference to the accompanying drawings, of which:
- Figure 1: Shows an offshore arrangement comprising a wind turbine, a subsea sub arrangement comprising in turn a monopile on a seafloor foundation, a vessel, and the system of Figure 2 comprising unmanned vehicles, according to an embodiment.
- Figure 2: Shows the autonomous 3D modeling and anomaly detection system for wind turbines installation, the operational workflow and modules interaction according to an embodiment thereof.
- Figure 3: Shows a flowchart of an autonomous 3D modeling and anomaly detection method, according to an embodiment.
- Figure 4: Shows the use of the autonomous 3D modeling and anomaly detection system throughout various assembly stages of the offshore arrangement of Figure 1, according to an embodiment.

### DESCRIPTION OF THE DRAWINGS

The illustration in the drawings is in schematic form. It is noted that in different figures, similar or identical elements may be provided with the same reference signs. Figures represent a way of carrying out exemplary embodiments and it is to be understood that the solution is not limited by the disclosed examples, and that numerous additional modifications and variations could be made thereto by a person skilled in the art without departing from the scope of the invention.

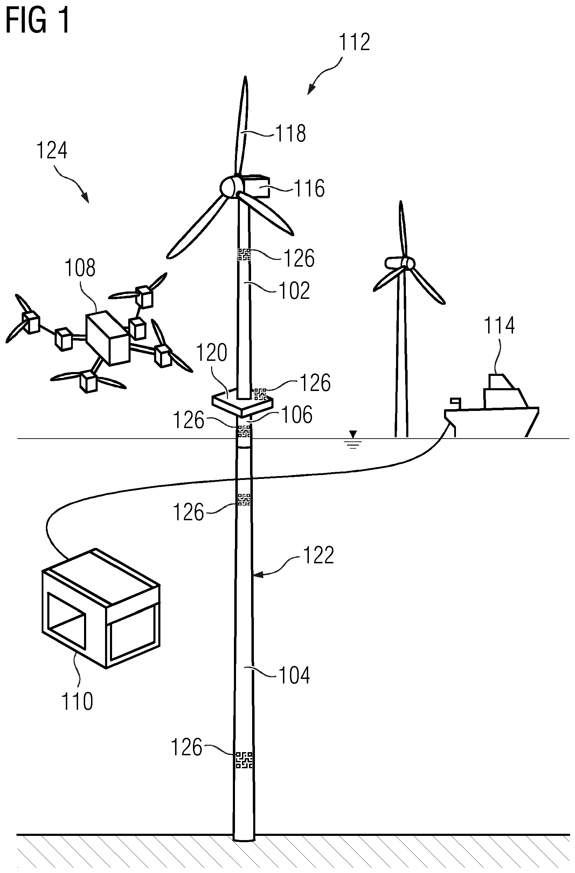

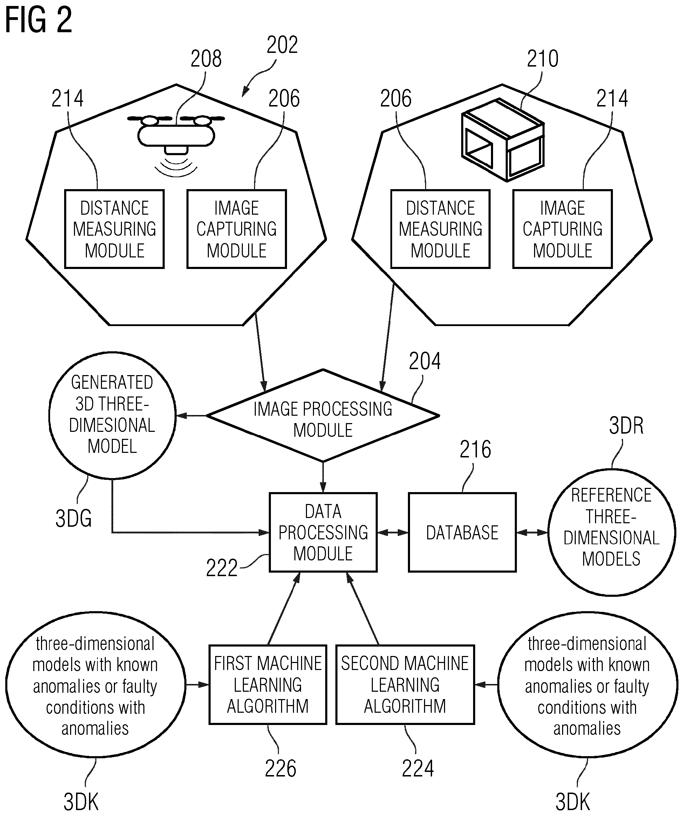

FIG. 1 shows an offshore arrangement (124) that includes an array of unmanned vehicles (108, 110) which form part of the autonomous 3D modeling and anomaly detection system (202) which is depicted in FIG. 2. The system (202) which will be explained in more detail further ahead may be part of the offshore arrangement.

Referring now to FIG. 1, at the top, the wind turbine includes a tower (102) supporting a nacelle (116) from which extend rotor blades (118) rotatable coupled thereof, collectively representing some of the above-water components of the wind turbine (112). The nacelle (116) is located at the uppermost section of the tower (102) .

In the vicinity of the tower (102), there is depicted an unmanned aerial vehicle (108) depicted in flight, equipped with both an image capturing module (206) and a distance measuring module (214) as illustrated in FIG. 2. This aerial vehicle (108) is configured to capture images and measuring distances to and/or from components of the wind turbine (112), particularly those extending above the sea surface, for the purpose of generating three-dimensional models and detecting any anomalies.

Submerged beneath the sea surface is a monopile (104), which anchors the structure to the seafloor. The monopile (104) is rigidly connected to a transition piece (106), which in turn supports the tower (102). A caisson (414) is designed to be rigidly attached to both the monopile (104) and the transition piece (106) to provide additional stability to the structure. The transition piece 106 may be partly submerged and partly on the surface, being at least in part on the interface between the surface portion and the subsea portion.

An unmanned underwater vehicle (110) is illustrated next to the monopile (104), similarly equipped with an image capturing module (206) and distance measuring modules (214) as the aerial vehicle (108), tasked with capturing images and measurements of the subsea components of the wind turbine (112).

A vessel (114) is shown on the water surface, which is equipped with a communication module. This vessel (114) serves as the operational base for transmitting data and/or electrical power to the underwater vehicle (110), facilitating the autonomous operation of the underwater vehicle (110).

FIG. 1. further illustrates that the offshore arrangement 124 may further comprise a platform (120) for hydrogen generation and storage (120), which is attached to the tower (112) of the offshore wind turbine arrangement (124). This platform (120) is positioned on the tower (102) above the water surface, enabling it to harness the mechanical energy produced by the wind turbine's rotor blades (118) for the purpose of hydrogen generation.

The platform (120) serves a dual function. Firstly, it contains equipment necessary for the electrolysis process, which splits water into hydrogen and oxygen using the electricity generated by the wind turbine (124). This process of hydrogen generation is particularly advantageous for offshore wind turbines, as it provides a way for energy storage and transportation that is more efficient than electrical cabling, especially over long distances.

Secondly, the platform (120) may be equipped with storage facilities for the produced hydrogen. The hydrogen can be compressed or liquified, depending on the technology used, and stored in tanks supported by said platform (120) until it is ready to be transported. The vessel (114) may also serve as the means for this transport, collecting the stored hydrogen from the platform (120) and bringing it to shore or to another location for use.

The presence of the platform (120) necessitates rigorous oversight during assembly to ensure that all components are mounted within strict tolerance thresholds. This vigilance is not only pivotal during the assembly phase but also in the subsequent operational phases to maintain the structural integrity and functionality of the entire assembly as it adds a significant hundreds of tones to the structure overhanging just above sea level.

Ensuring the structural integrity and operational functionality of the hydrogen generation and storage platform (120) is of greatest importance, as any anomalies or faults could impact the overall efficiency and safety of the energy conversion and storage process and/or add vibrations or tolerances defects to the rest of components of the wind turbine 112.

The autonomous 3D modeling and anomaly detection system (202) if FIG. 2 plays a crucial role in this context, as it enables continuous monitoring and verification that the platform (120) and associated components are within acceptable tolerance levels, thus safeguarding against potential assembly errors or post-installation deformations that could affect the overall stability and efficiency of the wind turbine system.

More specifically, Figure 2 illustrates the operational workflow and component interaction within the autonomous 3D modeling and anomaly detection system (202) for wind turbines installations, particularly suited for offshore environments.

Unmanned vehicles (208, 210), in an embodiment both an aerial vehicle (208) and an underwater vehicle (210) are encompassed, each equipped with an image capturing module (206) and a distance measuring module (214). The image capturing module (206) is responsible for acquiring visual data of the wind turbine's components, while the distance measuring module (214) provides precise measurements from or to the one or more components (102,104,106, 116, 118, 120) for accurate spatial analysis and 3D modeling.

The acquired data from these modules are then processed by an image processing module (204), which synthesizes the captured images and distance measurements to generate a three-dimensional model (3DG) of the wind turbine (112). This model serves as a detailed digital representation of the physical state and assembly tolerances of one or more components (102,104,106, 116, 118, 120).

The generated three-dimensional model (3DG) is then fed or accessed by a data processing module (222), which communicates with a database (216) that contains reference three-dimensional models (3DR). These reference three-dimensional models (3DR) represent the wind turbine (112) components (102,104,106, 116, 118, 120) under reference or ideal conditions, serving as a reference against which the generated three-dimensional model (3DG) may be compared.

Building upon the system outlined in Figure 2, the comparison between the generated 3D model (3DG) and the reference 3D models (3DR) may be a multi-faceted process that employs various analytical techniques to ensure comprehensive anomaly detection. This comparison can include point cloud generation, mesh comparison, volumetric analysis, texture and material analysis, and feature-based comparison. Such techniques allow for the detection of geometric discrepancies, surface irregularities, and volumetric deviations which might indicate conditions like wear, erosion, or assembly faults. The comparison may be devoid of any machine learning algorithms, or used the machine learning algorithms maybe only used once trained for further checking. Furthermore, the comparison step may be only done throughout the training of the machine learning algorithms.

In some embodiments, for the purpose of anomaly detection and condition assessment, the system (202), as illustrated in FIG.2, the system may employ two machine learning algorithms: the first machine learning algorithm (226) and the second machine learning algorithm (224). Each algorithm is trained to recognize specific types of discrepancies, anomalies, or faulty conditions associated with the wind turbine components. The first machine learning algorithm (226) may be trained for analyzing underwater conditions and components, while the second machine learning algorithm (224) focuses on above-water conditions and components.

The machine learning algorithms may be trained using three-dimensional models with known anomalies or faulty conditions (3DK). Through these steps, the system can detect deviations from the expected conditions, such as structural misalignments, wear, tear, or material defects.

Using at least two machine learning algorithms (224,226), including the first machine learning algorithm (226) trained for underwater conditions and the second machine learning algorithm (224) trained for above-water conditions, play a pivotal role in enhancing the determination of anomalies or faulty conditions.

Upon identifying any discrepancies, the system can document the anomaly's location using machine-readable identifiers (126) as depicted in FIG. 1, which may be located on different portions of the wind turbine components. This documentation facilitates targeted maintenance operations and contributes to a more efficient root analysis for future maintenance and repairs.

The use of machine-readable identifiers (126), such as QR codes or barcodes, is integrated into the system to streamline the tracking and analysis of the wind turbine components. Unmanned vehicles equipped with scanning capabilities can identify these identifiers during the survey or 3D modeling process, during preprocessing or post-processing, linking the captured images and measurements directly to the corresponding component. This facilitates the documentation of any identified damage or anomaly in a digital record, enhancing the efficiency of maintenance operations and the organization of inspection data.

More in particular, in some embodiments, the one or more unmanned vehicles are configured to scan machine-readable identifier (126) to perform any one or more of the following steps:
accessing and/or selecting a reference three-dimensional model (3DR) from the database (216),
integrating two or more provisionally generated three-dimensional models into a merged generated three-dimensional model (3DG),
pinpointing one or more locations of discrepancies or faulty conditions identified, and/or
issuing or recording a compliance or a non-compliance information to the corresponding machine-readable identifier (126) based on a discrepancy or a faulty conditions detection outcome for the scanned one or more components (102,104, 106,116, 118, 120) or part thereof .

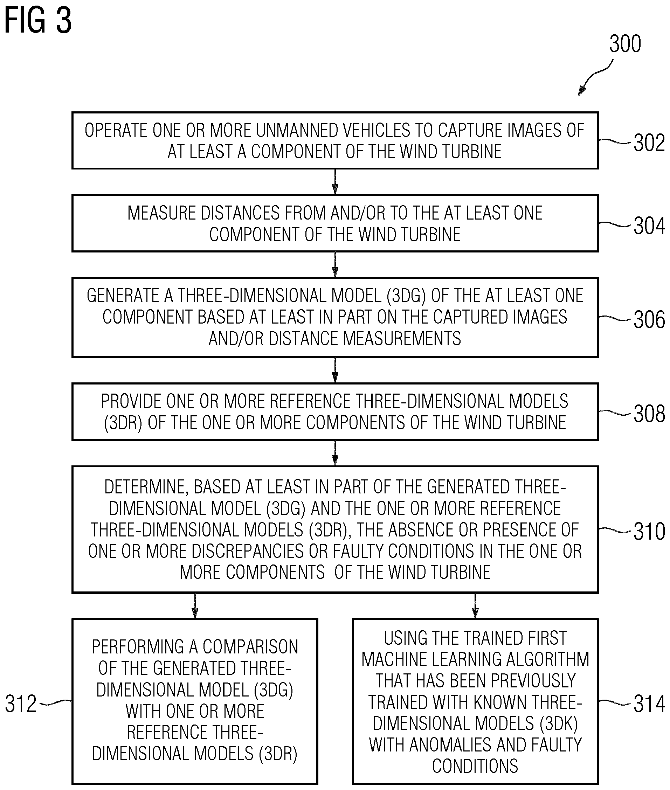

The preferred way of carrying out the above-mentioned steps, preferably, if available, by the system (200), will be explained in greater detail next, with the aid of Figures 3 flowchart.

More specifically, FIG. 3 outlines a method (300) for autonomous 3D modeling and anomaly detection of one or more components (102,104, 106,116, 118, 120) of the wind turbine (112).

As will be appreciated, some embodiments of the present invention may be embodied as a method, system, or computer program product. Accordingly, the present invention may take the form of an entirely hardware embodiment, an entirely software embodiment (including firmware, resident software, micro-code, etc.) or an embodiment combining software and hardware aspects all generally referred to herein as a "circuit", "module," or "system". Furthermore, the present invention may take the form of a computer program product on a computer-usable storage medium having computer-usable program code embodied in the medium. As used herein, the terms "software" or "firmware" are interchangeable and include any computer program stored in memory for execution by a processor, including RAM memory, ROM memory, EPROM memory, EEPROM memory, and non-volatile RAM (NVRAM) memory. The above memory types are exemplary only and are thus not limiting as to the types of memory usable for storage of a computer program.

Any suitable computer readable medium may be utilized. The computer-usable or computer-readable medium may be, for example but not limited to, an electronic, magnetic, optical, electromagnetic, infrared, or semiconductor system, apparatus, de-vice, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device.

Computer program code for carrying out operations of the present invention may be written in an object-oriented programming language such as Java7, Smalltalk or C++, or the like. However, the computer program code for carrying out operations of the present invention may also be written in conventional procedural programming languages, such as the "C" programming language, or a similar language. The program code may execute entirely on the user's computer, partly on the user's computer, as a stand-alone software package, partly on the user's computer and partly on a re-mote computer or entirely on the remote computer. In the latter scenario, the re-mote computer may be connected to the user's computer through a local area network (LAN) or a wide area network (WAN), or the connection may be made to an external computer (for example, through the Internet using an Internet Service Provider).

More specially, referring back to Figure 3, step (302) initiates the method (300), where one or more unmanned vehicles are operated to capture images of at least a component of the wind turbine (112). These components could include, but are not limited to, the tower (102), nacelle (116), blades (118), monopile (104), transition piece (106), or any other relevant component of a wind turbine.

Step (304) involves the measurement of distances from and/or to the at least one component of the wind turbine. This step (302) is important for acquiring accurate spatial data necessary for constructing the 3D model.

At step (306), the method (300) generates a three-dimensional model (3DG) of the at least one component based on the captured images and/or distance measurements. This model serves as a detailed representation of the current physical state of the wind turbine components.

At step (308), the method comprises accessing or providing one or more reference three-dimensional models (3DR).

Next, step (310) is a decision-making point where the method determines the absence or presence of one or more discrepancies or faulty conditions in the one or more components. This is where the detailed analysis for anomaly detection occurs.

For doing such determination at step (310), the depicted Method (300) involves two complementary alternatives, depicted as branches into two pathways at step (310), which can be conducted in tandem or as alternatives:
Pathway (312) involves performing a comparison of the generated three-dimensional model (3DG) with one or more reference three-dimensional models (3DR). These reference models represent the expected state of the components under normal, fault-free conditions. The comparison may be done without a trained machine learning model using one or more of the techniques aforementioned and other suitable techniques.

Pathway (314) utilizes a trained first machine learning algorithm (226) that has been previously trained with known three-dimensional models with anomalies and faulty conditions (3DK). This algorithm can intelligently analyze the generated model (3DG) to identify patterns or features characteristic of known issues, thus assisting in the detection of anomalies or faulty conditions.

Both pathways provide a robust solution, and both can be combined to increase the quality and reliability of the output for the anomaly detection.

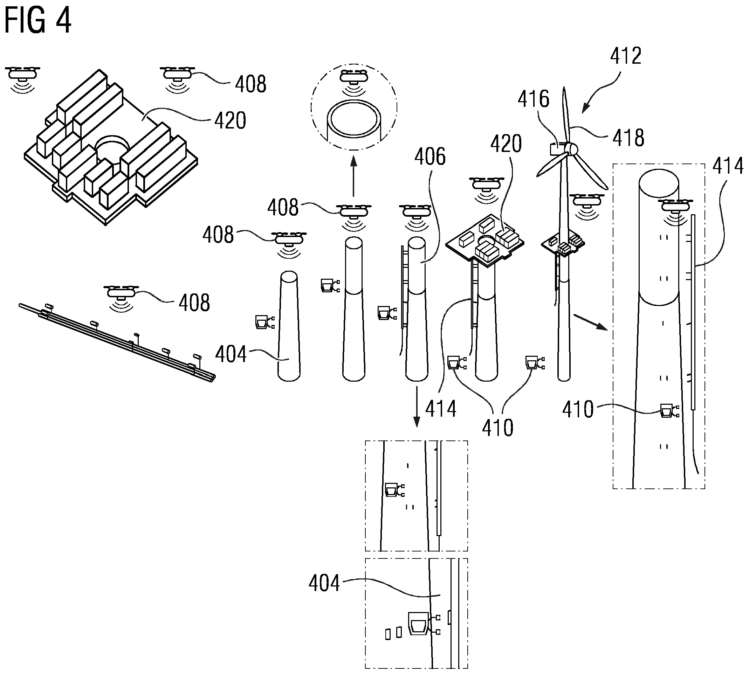

Figure 4 depicts various stages of installation within an offshore arrangement (124=, showcasing how the autonomous 3D modeling and anomaly detection system (200) can be implemented at different stages of assembly to ensure the integrity of components and the accuracy of the assembly process.

The leftmost portion of Figure 4 provides a system's (200) pre-installation overview of the supporting platforms for hydrogen generation and storage (420), for assessing its condition prior to the commencement of the installation process. This pre-installation inspection is aimed at ensuring there has been no damage during transportation and establishing accountability for the component's state before it is assembled in the wind turbine.

The damage or anomalies detection may be performed by step (308) of the method as depicted in Figure 3. Similarly, the system (202) may reproduce said method according to any of the embodiments, at every step of the assembly processes explained next.

The isolated representation of the platform (420) in the top-left image (408) signifies a detailed pre-assembly model which might be used as a standard for inspection. This may be performed not only for the platform which exemplifies it, but for any one or more components of the wind turbine

The system can utilize the generated model (3DG), the reference three-dimensional models (3DR) and/or the machine learning algorithms (226, 224) to meticulously examine any component of the 412 for detecting any signs of damage, such as cracks, deformations, or any other anomalies that could have occurred during transportation. For example, by capturing images and measuring distances from critical points of the platform, the system can compare these real-time data points against the undamaged reference model to ascertain the platform's integrity.

The system might focus on high-stress points, connection interfaces, or other areas susceptible to damage during handling and transit. This detailed inspection helps in establishing a clear accountability trail, documenting the component's condition upon arrival at the installation site.

The inspection process at this stage serves several advantages. It serves as a safeguard against the incorporation of compromised components into the offshore wind turbine structure, which could lead to weakened structural performance or failure. By confirming that the platform is free from transport-related damages, the system ensures that the assembly begins on a solid foundation, both literally and figuratively. This proactive approach in the early phase of assembly supports the overall quality assurance of the construction process and contributes to the long-term reliability of the offshore wind turbine installation. Furthermore, the problem of accountability to detect where the component was damaged, this is, if during transportation or during installation, is solved.

FIG. 4 further depicts a monopile (404) of a subsea sub-arrangement. The system (202) making use of the underwater vehicle (410) is capable of executing steps of the method 300 to detect the present or absence of anomalies or faulty conditions of the monopile 404, further checking flanges and segments of the monopile (404) before a further assembly stage thereat.

Directly below this, it is depicted a detailed view of a sub-assembly, focusing on a joining portion or flange wherein a caisson (414) is mounted between the monopile 404 and the transition piece (406). Again, the system 202 making use of the underwater vehicle (410) is capable of executing steps of the method (300) as aforementioned for FIG. 3, to detect the present or absence of anomalies or faulty conditions any of these components, namely, so far, the monopile (404), the transition piece (406) and the caisson (414).

Each section may have a machine-readable identifier (126), which enable the unmanned vehicles (408,410) to recognize and catalog each part accurately. These machine-readable identifiers (126) allow the system (202) to track the components through different assembly stages and ensure each is assembled in the correct sequence and orientation.

To the right, a detailed view shows the interface between the monopile (104) and the transition piece (106), focusing the joint areas which may be monitored and checked for potential deficiencies. Here, the system may check the alignment and fitting of the flanges or connection points, confirming that they match the reference model and that there are no anomalies or misalignments that could compromise structural integrity.

Above this, an assembly stage is depicted, where an aerial vehicle 408 equipped with an image capturing module (206) and a distance measuring module 214 is configured to generate a 3D model, and for further anomalies or faulty condition determination, this is, for example, the alignment and the condition of components as they are joined. This real-time inspection may be important to detect any discrepancies during the actual assembly process.

The top-right image shows a complete assembly stage, where the fully erected tower (402) or monopile (404) is in place. Here, the system (202) performs a comprehensive scan of the entire structure, comparing it against the reference three-dimensional models to ensure that the final assembly conforms to design specifications and that no new defects have arisen during the assembly process.

Each detailed view provides a close-up inspection of critical junctions, such as where the transition piece 406 meets the tower 402. The system's ability to analyze these points ensures that all seals, bolts, and other fastening mechanisms are properly installed and that there are no gaps, misalignments, or other issues that could lead to failures in the future.

In summary, Figure 4 illustrates the use of the autonomous 3D modeling and anomaly detection system (202) throughout the entire assembly process of an offshore arrangement (124). From the initial condition check of individual components to the final assembly verification, the system ensures that each stage of the assembly process is executed to the highest standards, preventing potential issues that could affect the wind turbine's performance and lifespan.

The offshore arrangement (124) comprising the system (202), the system (202), and the associated method (300), for 3D modeling and anomaly detection, in particular aided by machine-readable identifiers (126) and machine learning algorithms (224,226) specifically trained as aforementioned, represents a significant advantage in the field of wind turbine maintenance and assembly. It ensures a correct autonomous tracking from an early stage, before installation, during installation and during operation, with any potential issues being identified and addressed promptly, autonomously, and digitally. This solution becomes increasingly important particularly for offshore platforms, whose dimension, weights and integration with hydrogen platforms requires abiding by critical tolerance thresholds during assembly and digital tracking of the components from an early stage for correct accountably and future failure root assessments.

It should be noted that the use of "a" or "an" throughout this application does not exclude a plurality, and "comprising" does not exclude other steps or elements. Also, elements described in association with different embodiments may be combined. It should also be noted that reference signs in the claims should not be construed as limiting the scope of the claims.

### CLAUSES

For reasons of completeness, various aspects of the present invention are set out in the following numbered clauses:
Clause 1. An autonomous 3D modeling and anomaly detection system (202) for a wind turbine (412), said system comprising:
   one or more unmanned vehicles (408, 108, 208, 110, 410, 210) each comprising:
   an image capturing module (206) configured to capture images of a one or more components (102,402,104, 404, 106, 406, 414, 116, 416, 118, 418, 120, 420) of the wind turbine (112, 412), and
      a distance measuring module (214) configured to measure distances from and/or to the one or more components (102,402,104, 404, 106, 406, 414, 116, 416, 118, 418, 120, 420) of a wind turbine (412),
      an image processing module (204) configured to generate a three-dimensional model (3DG) including the one or more components (102,402,104, 404, 106, 406, 414, 116, 416, 118, 418, 120, 420) of the wind turbine (412), based at least in part on the captured images and/or the distance measurements,
         wherein the image processing module (204) or a further a data processing module (222) comprises or is communicated with a database (216) comprising one or more reference three-dimensional models (3DR) including the one or more components (102,402,104, 404, 106, 406, 414, 116, 416, 118, 418, 120, 420) of the wind turbine (112, 412) at a reference conditions, said image processing module (204) or the further data processing module (222) configured to:
   determine, based at least in part on the generated three-dimensional model (3DG) and the one or more reference three-dimensional models (3DR), an absence or existence of a one or more anomalies or faulty conditions of the one or more components (102,402,104, 404, 106, 406, 414, 116, 416, 118, 418, 120, 420).
Clause 2. The system (202) of claim 1, further comprising performing a comparison of the generated three-dimensional model (3DG) with the one or more reference three-dimensional models (3DR), and determining, based on the comparison, an absence or existence of a one or more anomalies or faulty conditions of the one or more components (102,402,104, 404, 106, 406, 414, 116, 416, 118, 418, 120, 420), in particular the comparison involving at least a tolerances comparison within the models (3DG, 3DR).
Clause 3. The system (202) of claim 1 or 2, wherein the one or more unmanned vehicles (408, 108, 208, 110, 410, 210) include an underwater vehicle (110, 410, 210) and/or an aerial vehicle (108, 408, 208), in particular wherein the underwater vehicle (2) is selected from a list consisting of:
   a Remotely Operated Underwater Vehicle (ROV),
   a Portable Remotely Operated Underwater Vehicle (PROV),
   an Autonomous Underwater Vehicles (AUV), or
   a Hybrid Remotely Operated Underwater vehicle (HROV).
Clause 4. The system (202) of any one of claims 1 to 3, wherein the generated three-dimensional models (3DG) include at least two or more adjacently mounted components of the one or more components (102,402,104, 404, 106, 406, 414, 116, 416, 118, 418, 120, 420), and the database (216) comprises one or more reference three-dimensional models (3DR) including at least said two or more adjacently mounted components at reference conditions.
Clause 5. The system (202) of claim 4, wherein the two or more adjacently mounted components comprise an underwater component captured by the underwater vehicle (110, 410, 210), and an above-water component captured by the aerial vehicle (108, 408, 208), in particular capturing one or more components (102,402,104, 404, 106, 406, 414, 116, 416, 118, 418, 120, 420) mounted or intended to be mounted beneath and above sea level.
Clause 6. The system (202) of any one of claims 1 to 5, wherein the one or more components (102,402,104, 404, 106, 406, 414, 116, 416, 118, 418, 120, 420) comprise a machine-readable identifier (126), in particular further comprising a plurality of machine-readable identifiers (126) on different portions of each of the one or more components (102,402,104, 404, 106, 406, 414, 116, 416, 118, 418, 120, 420), wherein the image capturing module (206) of the one or more unmanned vehicles (408, 108, 208, 110, 410, 210) are configured to scan said machine-readable identifier (126).
Clause 7. The system (202) of any one of claims 1 to 6, wherein the one or more unmanned vehicles (108,208,308, 110, 210, 310) are configured to scan machine-readable identifier (126) to perform any one or more of the following steps:
   accessing and/or selecting a reference three-dimensional model (3DR) from the database (216),
   integrating two or more provisionally generated three-dimensional models into a merged generated three-dimensional model (3DG),
   pinpointing one or more locations of discrepancies or faulty conditions identified, and/or
   issuing or recording a compliance or a non-compliance information to the corresponding machine-readable identifier (126) based on a discrepancy or a faulty conditions detection outcome for the scanned one or more components (102,402,104, 404, 106, 406, 414, 116, 416, 118, 418, 120, 420) or part thereof.
Clause 8. The system (202) of any one of claims 1 to 7, wherein the image capturing module (206) comprises one or more image capturing elements selected from a list consisting of:
   a high-resolution digital camera,
   an infrared camera,
   a multispectral imaging sensor, and
   a side-scan sonar.
Clause 9. The system (202) of any one of claims 1 to 8, , wherein the distance measuring module (214) comprises one or more distance measuring elements selected from a list consisting of:
   Light Detection and Ranging (Lidar) devices,
   sonar devices including single-beam and/or multibeam for underwater depth and terrain mapping,
   radar-based distance sensors,
   Ultra-Short Baseline (USBL), and
   Doppler Velocity Logs (DVL).
Clause 10. The system (202) of any one of claims 1 to 9, wherein the data processing module (222) or the image processing module (104), incorporates or is communicated with a machine learning algorithm (226, 224) trained using a dataset of a previously captured images comprising discrepancies, anomalies and/or faulty conditions from the one or more components (102,402,104, 404, 106, 406, 414, 116, 416, 118, 418, 120, 420) or two or more components mounted thereof.
Clause 11. An autonomous 3D modeling and anomaly detection system (202), incorporating one or more trained machine learning algorithms (226, 224), the system (202) comprising:
   one or more unmanned vehicles (408, 108, 208, 110, 410, 210), each comprising:
   an image capturing module (206) configured to capture images of one or more components (102,402,104, 404, 106, 406, 414, 116, 416, 118, 418, 120, 420) of a wind turbine (412), and
   a distance measuring module (214) configured to measure distances from and/or to the one or more components (102,402,104, 404, 106, 406, 414, 116, 416, 118, 418, 120, 420),
   an image processing module (204) configured to generate a three-dimensional model (3DG) comprising the one or more components of the wind turbine (412), based at least in part on the captured images and the distance measurements ,
   wherein the one or more machine learning algorithms (226, 224) are trained on a dataset of images comprising discrepancies and/or faulty conditions from various wind turbine (412) components or assemblies, and each (226, 224),
   wherein the one or more trained machine learning algorithms (226, 224) are configured to determine, based on the generated three-dimensional model (3DG), an absence or existence of one or more anomalies or faulty conditions of the one or more components (102,402,104, 404, 106, 406, 414, 116, 416, 118, 418, 120, 420) of the wind turbine (412).
Clause 12. The system (202) of claim 11, wherein the one or more machine learning algorithms (226, 224), are configured to be trained with one or more reference three-dimensional models (3DR), in particular said reference three-dimensional models (3DR) used as a benchmark.
Clause 13. The system (202) of claim 11 or 12, wherein the one or more machine learning algorithm (226, 224) are further trained to recognize and categorize different types of discrepancies, in particular said types comprising at least one of: structural misalignments, wear and tear, or material defects.
Clause 14. The system of any one of claims 11 to 13, wherein the data processing module (222) or the image processing module (204), is further configured to perform a validation step, said validation step comprising:
   performing, a comparison of the generated three-dimensional model (3DG) with the one or more reference three-dimensional models (3DR), and
   determining, based at least in part from the comparison, an absence or existence of one or more anomalies or faulty conditions of the one or more components (102,402,104, 404, 106, 406, 414, 116, 416, 118, 418, 120, 420) of the wind turbine (112, 412).
Clause 15. The system of any one of claims 11 to 14, wherein the one or more machine learning algorithms comprises at least two machine learning modules,
   a first machine learning algorithm (226) trained at underwater conditions, configured to detect an absence or existence of a one or more anomalies or faulty conditions for an underwater component,
   a second machine learning algorithm (224) trained at surface conditions, configured to detect an absence or existence of a one or more anomalies or faulty conditions for an above-water component.
Clause 16. The system of any one of claims 11 to 15, wherein the generated three-dimensional model (3DG) includes at least two or more adjacently mounted components of a wind turbine (412), and the database (216) comprises one or more reference three-dimensional models (3DR) including at least said two or more adjacently mounted components of the one or more components (102,402,104, 404, 106, 406, 414, 116, 416, 118, 418, 120, 420) at reference conditions.
Clause 17. The system of claim 16, wherein the two or more adjacently mounted components comprise an underwater component of the (412) captured by the underwater vehicle (110, 410, 210), and an above-water component captured by the aerial vehicle (108, 408, 208), in particular capturing one or more components (102,402,104, 404, 106, 406, 414, 116, 416, 118, 418, 120, 420) mounted beneath and above sea level.
Clause 18. The system of any one of claims 11 to 17, wherein the image processing module (204) or a data processing module (222), is configured to merge an underwater three-dimensional portion into an above water three-dimensional portion resulting in the generated three-dimensional model (3DG)
Clause 19. An offshore arrangement (124), comprising:
   a subsea sub-arrangement (122) comprising a monopile and a transition piece intended to be rigidly mounted to the monopile (404, 104), in particular the subsea sub-arrangement (122) further comprising a caisson (414) intended to be rigidly attached to the monopile (104, 404) and to the transition piece (106, 406),
   a tower (102, 402) intended to be securely mounted on the transition piece (106, 406),
   a vessel (114) equipped with a communication module configured to transmit data and/or electrical power to a one or more unmanned underwater vehicle (110, 410, 210),
   wherein the offshore arrangement (122) further comprises the autonomous mapping system (202) of any one of claims 1 to 18.
Clause 20. A method for 3D modeling and detecting anomalies in a wind turbine, wherein the method comprises the steps of:
   operating one or more unmanned vehicles (108, 408, 208, 110, 410, 210) to capture images one or more components (102,402,104, 404, 106, 406, 414, 116, 416, 118, 418, 120, 420) of the wind turbine (112, 412),
   measuring distances from and/or to the at least one component of the wind turbine (112, 412),
   generating a three-dimensional model (3DG) of the at least one component based at least in part on the captured images and/or distance measurements,
   providing or accessing one or more reference three-dimensional models (3DR) of the one or more components (102,402,104, 404, 106, 406, 414, 116, 416, 118, 418, 120, 420) of the wind turbine (112,412), and
   determining, based at least in part of the generated three-dimensional model (3DG) and the one or more reference three-dimensional models (3DR), the absence or presence of one or more anomalies or faulty conditions for the one or more components (102,402,104, 404, 106, 406, 414, 116, 416, 118, 418, 120, 420) of the wind turbine (112, 412),
Clause 21. The method of claim 20, wherein the determining of the absence or presence of one or more discrepancies or faulty conditions is based at least in part on a comparison of the generated three-dimensional model (3DG) with the one or more reference three-dimensional models (3DR), in particular wherein the comparison comprises at least a tolerance comparison within the models (3DG, 3DR).
Clause 22. The method of claim 20 or 21, wherein the previous steps are repeated through various assembly stages during an assembly procedure of the wind turbine, such that the method further comprises identifying an anomaly assembly stage among the various assembly stages, said anomaly assembly stage determined by the comparison within the models (3DG, 3DR).
Clause 23. The method of claim 20 or 21, further comprising performing a maintenance or service action triggered, guided and/or diagnosed based at least in part on the images captured, in particular on an offshore wind turbine (112,412) and further in particular in one or more underwater components.
Clause 24. The method of any one of claims 21 to 23, generating, a three-dimensional model that includes at least two or more adjacently mounted components of the one or more components (102,402,104,404,106,406,414,116,416,118, 418,120,420) of the wind turbine (112,412),
   comparing, the generated three-dimensional model models with the reference three-dimensional models comprising at least the two or more adjacently mounted components at reference conditions.
Clause 25. The method of any one of claims 21 to 24, further comprising merging an underwater three-dimensional generated portion with an above water three-dimensional generated portion resulting in the generated three-dimensional model.
Clause 26. A computing apparatus comprising a processor and a memory storing instructions that, when executed by the processor, configure the apparatus to the steps of:
   generating or accessing a three-dimensional model of one or more components (102,402,104, 404, 106, 406, 414, 116, 416, 118, 418, 120, 420) of a wind turbine (112,412), said three-dimensional model based at least in part on images received or accessed from an image capturing module comprised in a one or more unmanned vehicles (108,408,208,110,410,210),
   determining the absence or presence of one or more discrepancies or faulty conditions at the one or more components (102,402,104, 404, 106, 406, 414, 116, 416, 118, 418, 120, 420), said determining based at least in part on any one of the following steps:
      accessing a database (216) that comprises one or more reference three-dimensional models (3DR) of the one or more components (102,402,104,404,106,406, 414,116,416,118,418,120,420), and performing a comparison of the generated 3D model with the one or more reference three-dimensional models, and/or
      using a one or more trained machine learning algorithm (226, 224) trained with three-dimensional models with known anomalies or faulty conditions (3DK) with anomalies and/or faulty conditions, in particular further using the one more reference three-dimensional model (3DR) as part of a training step of the one or more trained machine learning algorithm (226, 224).
Clause 27. A non-transitory computer-readable storage medium, the computer-readable storage medium including instructions that when executed by a computer, cause the computer to perform the steps of:
   generating or accessing, a three-dimensional model of one of one or more components (102,402,104, 404, 106, 406, 414, 116, 416, 118, 418, 120, 420) of a wind turbine, said three-dimensional model based at least in part on images received or accessed from an image capturing module (206) comprised in a one or more unmanned vehicles (108,408, 208, 110, 410, 210),
   determining, the absence or presence of one or more discrepancies or faulty conditions in the one or more components (102,402,104, 404, 106, 406, 414, 116, 416, 118, 418, 120, 420), said determining based at least in part on any one of the following steps:
      accessing a database (216) that comprises one or more reference three-dimensional models (3DR) of the one or more components (102,402,104, 404, 106, 406, 414, 116, 416, 118, 418, 120, 420) of the wind turbine (112,412), and performing a comparison of the generated three-dimensional models with the one or more reference three-dimensional models, and/or
      using a one or more trained machine learning algorithm (226, 224) trained with three-dimensional models with known anomalies or faulty conditions (3DK) with anomalies and/or faulty conditions, in particular further using the one more reference three-dimensional model (3DR) as part of a training step of the one or more trained machine learning algorithm (226, 224).

## Claims

1. An autonomous 3D modeling and anomaly detection system (202) for a wind turbine (412), said system comprising:
one or more unmanned vehicles (408, 108, 208, 110, 410, 210) each comprising:
an image capturing module (206) configured to capture images of a one or more components (102,402,104, 404, 106, 406, 414, 116, 416, 118, 418, 120, 420) of the wind turbine (112, 412), and
a distance measuring module (214) configured to measure distances from and/or to the one or more components (102,402,104, 404, 106, 406, 414, 116, 416, 118, 418, 120, 420) of a wind turbine (412),
an image processing module (204) configured to generate a three-dimensional model (3DG) including the one or more components (102,402,104, 404, 106, 406, 414, 116, 416, 118, 418, 120, 420) of the wind turbine (412), based at least in part on the captured images and/or the distance measurements,
wherein the image processing module (204) or a further a data processing module (222), comprises or is communicated with a database (216) comprising one or more reference three-dimensional models (3DR) including the one or more components (102,402,104, 404, 106, 406, 414, 116, 416, 118, 418, 120, 420) of the wind turbine (112, 412) at a reference conditions, said image processing module (204) or the further data processing module (222) configured to:
determine, based at least in part on the generated three-dimensional model (3DG) and the one or more reference three-dimensional models (3DR), an absence or existence of a one or more anomalies or faulty conditions of the one or more components (102,402,104, 404, 106, 406, 414, 116, 416, 118, 418, 120, 420).

2. The system (202) of claim 1, further comprising performing a comparison of the generated three-dimensional model (3DG) with the one or more reference three-dimensional models (3DR), and determining, based on the comparison, an absence or existence of a one or more anomalies or faulty conditions of the one or more components (102,402,104, 404, 106, 406, 414, 116, 416, 118, 418, 120, 420), in particular the comparison involving at least a tolerance comparison within the models (3DG, 3DR).

3. The system (202) of claim 1 or 2, wherein the one or more unmanned vehicles (408, 108, 208, 110, 410, 210) include an underwater vehicle (110, 410, 210) and/or an aerial vehicle (108, 408, 208).

4. The system (202) of any one of claims 1 to 3, wherein the generated three-dimensional models (3DG) include at least two or more adjacently mounted components of the one or more components (102,402,104, 404, 106, 406, 414, 116, 416, 118, 418, 120, 420), and the database (216) comprises one or more reference three-dimensional models (3DR) including at least said two or more adjacently mounted components at reference conditions.

5. The system (202) of claim 4, wherein the two or more adjacently mounted components comprise an underwater component captured by the underwater vehicle (110, 410, 210), and an above-water component captured by the aerial vehicle (108, 408, 208) .

6. The system (202) of any one of claims 1 to 5, , wherein the one or more components (102,402,104, 404, 106, 406, 414, 116, 416, 118, 418, 120, 420) comprise a machine-readable identifier (126), wherein the image capturing module (206) of the one or more unmanned vehicles (408, 108, 208, 110, 410, 210) are configured to scan said machine-readable identifier (126)to perform any one or more of the following steps:
accessing and/or selecting a reference three-dimensional model (3DR) from the database (216),
integrating two or more provisionally generated three-dimensional models into a merged generated three-dimensional model (3DG),
pinpointing one or more locations of discrepancies or faulty conditions identified, and/or
issuing or recording a compliance or a non-compliance information to the corresponding machine-readable identifier (126) based on a discrepancy or a faulty conditions detection outcome for the scanned one or more components (102,402,104, 404, 106, 406, 414, 116, 416, 118, 418, 120, 420) or part thereof.

7. The system (202) of any one of claims 1 to 6, wherein the data processing module (222) or the image processing module (204), incorporates or is communicated with a machine learning algorithm (226, 224) trained using a dataset of a previously captured images comprising discrepancies, anomalies and/or faulty conditions of the one or more components (102,402,104, 404, 106, 406, 414, 116, 416, 118, 418, 120, 420) and/or two or more components mounted thereof.

8. An autonomous 3D modeling and anomaly detection system (202), incorporating one or more trained machine learning algorithms (226, 224), the system (202) comprising:
one or more unmanned vehicles (408, 108, 208, 110, 410, 210), each comprising:
an image capturing module (206) configured to capture images of one or more components (102,402,104, 404, 106, 406, 414, 116, 416, 118, 418, 120, 420) of a wind turbine (412), and
a distance measuring module (214) configured to measure distances from and/or to the one or more components (102,402,104, 404, 106, 406, 414, 116, 416, 118, 418, 120, 420),
an image processing module (204) configured to generate a three-dimensional model (3DG) comprising the one or more components of the wind turbine (412), based at least in part on the captured images and the distance measurements ,
wherein the one or more machine learning algorithms (226, 224) are trained on a dataset of images comprising discrepancies and/or faulty conditions from various wind turbine (412) components or assemblies,
wherein the one or more trained machine learning algorithms (226, 224) are configured to determine, based on the generated three-dimensional model (3DG), an absence or existence of one or more anomalies or faulty conditions of the one or more components (102,402,104, 404, 106, 406, 414, 116, 416, 118, 418, 120, 420) of the wind turbine (412).

9. The system (202) of claim 8, wherein the one or more machine learning algorithms (226, 224), are configured to be trained with one or more reference three-dimensional models (3DR), in particular said reference three-dimensional models (3DR) used as a benchmark.

10. The system (202) of any one of claims 8 to 9, wherein the image processing module (204) or a data processing module (222), is configured to merge an underwater three-dimensional portion into an above water three-dimensional portion resulting in the generated three-dimensional model (3DG).

11. The system (202) of any one of claims 8 to 10, wherein the one or more machine learning algorithms (224,226) comprises:
a first machine learning algorithm (226) trained at underwater conditions, configured to detect an absence or existence of a one or more anomalies or faulty conditions for an underwater component, and/or
a second machine learning algorithm (224) trained at surface conditions, configured to detect an absence or existence of a one or more anomalies or faulty conditions for an above-water component.

12. An offshore arrangement (124), comprising:
a subsea sub-arrangement (122) comprising a monopile (104,404) and a transition piece (106,406) intended to be rigidly mounted to the monopile (404, 104), in particular the subsea sub-arrangement (122) further comprising a caisson (414) intended to be rigidly attached to the monopile (104, 404) and to the transition piece (106, 406),
a tower (102, 402) intended to be securely mounted on the transition piece (106, 406),
a vessel (114) or boat, equipped with a communication module configured to transmit data and/or electrical power to a one or more unmanned underwater vehicle (110, 410, 210),
wherein the offshore arrangement (122) further comprises the system (202) of any one of claims 1 to 11.

13. A method (300) for 3D modeling and detecting anomalies in a wind turbine, wherein the method comprises the steps of:
operating one or more unmanned vehicles (108, 408, 208, 110, 410, 210) to capture images one or more components (102,402,104, 404, 106, 406, 414, 116, 416, 118, 418, 120, 420) of the wind turbine (112, 412),
measuring distances from and/or to the at least one component of the wind turbine (112, 412),
generating a three-dimensional model (3DG) of the at least one component based at least in part on the captured images and/or distance measurements,
providing or accessing one or more reference three-dimensional models (3DR) of the one or more components (102,402,104, 404, 106, 406, 414, 116, 416, 118, 418, 120, 420) of the wind turbine (112,412), and
determining, based at least in part of the generated three-dimensional model (3DG) and the one or more reference three-dimensional models (3DR), the absence or presence of one or more anomalies or faulty conditions for the one or more components (102,402,104, 404, 106, 406, 414, 116, 416, 118, 418, 120, 420) of the wind turbine (112, 412).

14. The method (300) of claim 13, wherein the previous steps are repeated through various assembly stages, in particular such that the method further comprises identifying an anomaly or faulty assembly stage among the various assembly stages.

15. A computing apparatus comprising a processor and a memory storing instructions that, when executed by the processor, configure the apparatus to the steps of:
generating or accessing a three-dimensional model of one or more components (102,402,104, 404, 106, 406, 414, 116, 416, 118, 418, 120, 420) of a wind turbine (112,412), said three-dimensional model based at least in part on images received or accessed from an image capturing module comprised in a one or more unmanned vehicles (108,408,208,110,410,210),
determining the absence or presence of one or more discrepancies or faulty conditions at the one or more components (102,402,104, 404, 106, 406, 414, 116, 416, 118, 418, 120, 420), said determining based at least in part on any one of the following steps:
accessing a database (216) that comprises one or more reference three-dimensional models (3DR) of the one or more components (102,402,104,404,106,406, 414,116,416,118,418,120,420), and performing a comparison of the generated 3D model with the one or more reference three-dimensional models, and/or
using a one or more trained machine learning algorithm (226, 224) trained with three-dimensional models with known anomalies or faulty conditions (3DK) with anomalies and/or faulty conditions, in particular further using the one more reference three-dimensional model (3DR) as part of a training step of the one or more trained machine learning algorithm (226, 224).
of the one or more trained machine learning algorithm (226, 224).
